# EUROPÄISCHE PATENTANMELDUNG

(11) **EP 4 755 489 A1**
(43) Veröffentlichungstag der Anmeldung: **10.06.2026**
(21) Anmeldenummer: 25198484.5
(22) Anmeldetag: 27.08.2025
(51) Int. Cl.: B01D 29/11, B01D 29/21, B01D 35/12, B01D 35/147, B01D 36/02

(54) **FILTERVORRICHTUNG**

(30) Priorität: 05.12.2024 DE 102024004066
(71) Anmelder: Hydac Filtertechnik GmbH, 66280 Sulzbach/Saar (DE)
(72) Erfinder: Sakraschinsky, Michael, 66386 St. Ingbert (DE); Lang, Timo, 66539 Neunkirchen (DE); Noll, Martin, 66386 St. Ingbert (DE); Klein, Volkmar, 66482 Zweibrücken (DE); Staudt, Johannes, 66424 Homburg (DE); Hegmann, Lars, 66299 Friedrichsthal (DE)
(74) Vertreter: Bartels und Partner, Patentanwälte

(57) **Zusammenfassung**

2. Vorrichtung zum Behandeln von Fluiden mit zwei Gehäuseteilen (10, 12) und mit mindestens einem darin jeweils, vorzugsweise tauschbar, aufgenommenen Element (14, 16) sowie mit einer zwischen den Gehäuseteilen (10, 12) aufgenommenen Umschalteinrichtung (18), die je nach Schaltstellung zumindest eines der Gehäuseteile (10, 12) nebst jeweils zugehörigem Element (14, 16) mit Fluid versorgt, dadurch gekennzeichnet, dass zumindest eines der beiden Elemente (14) ein Medium (42) aufweist, das zumindest teilweise aus Cellulosematerial besteht.

## Beschreibung

Die Erfindung betrifft eine Vorrichtung zum Behandeln von Fluiden, mit zwei Gehäuseteilen und mit mindestens einem darin jeweils, vorzugsweise tauschbar, aufgenommenen Element sowie mit einer zwischen den Gehäuseteilen aufgenommenen Umschalteinrichtung, die je nach Schaltstellung zumindest eines der Gehäuseteile nebst jeweils zugehörigem Element mit Fluid versorgt.

Dahingehende Vorrichtungen werden fachsprachlich auch als Umschaltarmaturen bezeichnet und sind insbesondere dann erforderlich, wenn gewährleistet sein muss, dass eine in einer solchen Vorrichtung besonders zu behandelnde Flüssigkeit respektive Fluid ununterbrochen einem Verbraucher zugeführt werden muss, auch wenn die Vorrichtung für die besondere Behandlung gelegentlich einer Wartung unterzogen und für diese Wartung die Fluidbehandlung unterbrochen werden muss. Demgemäß kann mittels der Umschaltarmatur respektive Umschalteinrichtung wahlweise immer ein Element für die Wartung außer Betrieb genommen werden während mit dem anderen in Funktion befindlichen Element der jeweils an die Vorrichtung angeschlossene Verbraucher weiter versorgt bleibt.

Durch DE 10 2010 025 153 A1 ist eine Schaltvorrichtung für einen Fluidstrom bekannt, mit einer ersten fluidführenden Verbindung und einer zweiten fluidführenden Verbindung zwischen einer ersten und einer zweiten Behandlungseinrichtung, wobei ein den ersten und zweiten Verteilerventilen zugeordnetes erstes Paar Schalthebel und ein den dritten und vierten Verteilerventilen zugeordnetes zweites Paar Schalthebel derart in unterschiedlichen Ebenen angeordnet sind, dass die Schalthebel des ersten Paares ungehindert von den Schalthebeln des zweiten Paares, und umgekehrt, von einer Bedienperson betätigbar sind. Als Verteilerventile kommen bei solchen Vorrichtungen regelmäßig Kugelhähne zum Einsatz, beispielsweise in Form eines 3-Wege-Kugelhahnes.

Die bei den bekannten Vorrichtungen dieser oder vergleichbarer Art zum Einsatz kommenden Elemente dienen regelmäßig der Fluidfiltration, sprich der Abreinigung von Partikelverschmutzung aus einem Fluidstrom, und weisen hierfür eine mehrlagige plissierte Filtermatte als Filtermedium auf, die sich unter Bilden eines tauschbaren Filterelementes als Hohlzylinder zwischen zwei Elementkappen erstreckt. Für eine beispielhafte Durchströmung von außen nach innen zwecks Fluidabreinigung ist das Filtermedium innenumfangsseitig mit einem fluiddurchlässigen Stützrohr versehen und der abgereinigte Filtratstrom gelangt über eine Mittenöffnung in einer der Endkappen in einen Fluid- oder Hydraulikkreislauf, an den die Filtervorrichtung mit diesem Filterelement sinnfällig angeschlossen ist. Nach außen und mithin zur Umgebung hin ist das plissierte Filterelementmaterial regelmäßig von einem fluiddurchlässigen Draht- oder Schutzgitter eingefasst. Solche mehrlagig abgestützten, insbesondere sterngefalteten Filtermatten werden fachsprachlich auch mit Meshpack bezeichnet und weisen insbesondere zusätzliche Glasfaser- oder Kunstsstofffaservliese auf. Derart ausgerüstete Filterelemente zeichnen sich durch eine hohe Schmutzaufnahmekapazität aus und erlauben mithin in hohem Maß eine Partikelabscheidung über einen weiten Differenzdruckbereich bei hoher Beständigkeit gegen Druck- und Volumenstromschwankungen. Ist das jeweilige Filterelement respektive Filtermedium von Verschmutzungen zugesetzt, ist ein Austausch gegen ein vergleichbares Neuelement ohne Weiteres möglich.

Ausgehend von diesem Stand der Technik liegt der Erfindung die Aufgabe zugrunde, dahingehende Vorrichtungen weiter zu verbessern, indem man deren Anwendungsmöglichkeiten erhöht.

Eine dahingehende Aufgabe löst eine Vorrichtung mit den Merkmalen des Patentanspruches 1 in seiner Gesamtheit.

Dadurch, dass gemäß dem kennzeichnenden Teil zumindest eines der beiden Elemente ein Medium aufweist, das zumindest teilweise aus Cellulosematerial besteht, kann das dahingehende Element mit besonderem Vorteil dem Abtrennen von Wasser aus fluiden Medien, wie Hydraulikölen, dienen. Insbesondere dienen dabei die Fasern des Zellulosematerials dazu, Wasser zu absorbieren. Bei vollständiger Sättigung kann das Element dann wiederum gegen ein Neuelement getauscht werden. Des Weiteren lassen sich mittels des Cellulosematerials verschiedenste Arten von Schlämmen einschließlich Varnish von einem zu behandelnden Fluid, insbesondere in Form einer Flüssigkeit, wie Hydrauliköl, trennen.

Vorzugsweise ist dabei weiter vorgesehen, dass das jeweils andere Element der Vorrichtung mehrlagig, vorzugsweise plissiert, ausgebildet ist und als Filterelement konzipiert der Partikelabreinigung aus einem Fluid, beispielsweise in Form eines Hydraulikmediums, dient.

Unabhängig von einer wasserabscheidenden Funktion des Cellulosematerials des einen Elements lässt sich ein dahingehend aufgebautes Medium gleichfalls als Filtermedium für die Partikelabreinigung konzipieren, so dass die Möglichkeit eröffnet ist, mit nur einer Vorrichtung und mit voneinander verschiedenen Elementen unterschiedliche Filterfeinheiten für die Partikelabreinigung zur Verfügung zu stellen. Gleichzeitig kann die Wasserabscheidefunktion beibehalten werden.

Bei einer weiteren bevorzugten Ausführungsform der erfindungsgemäßen Vorrichtung ist vorgesehen, dass das eine Element aus einer Stapelanordnung besteht, gebildet aus einer Vielzahl von das Medium, insbesondere Elementmaterial, bildenden Scheiben, von denen zumindest ein Teil das Cellulosematerial aufweist. Dabei können wahlweise mehr oder minder viele Scheiben den Stapelaufbau bilden, so dass je nach Abscheide- oder Filtrationsaufgabe sich das Element zwanglos und in kostengünstiger Weise daran anpassen lässt.

Vorzugsweise ist dabei weiter vorgesehen, dass jede Scheibe der Stapelanordnung aus zwei miteinander verbundenen Grundkörpern besteht, die jeweils zur Fluidführung eine Kanalstruktur aufweisen. Aufgrund der Kanalstruktur sind Drainagekanäle gebildet, die eine vergleichmäßigte Verteilung des jeweiligen Fluidstroms innerhalb einer Scheibe der Stapelanordnung gewährleistet, was zu besonders guten Abscheide- und Abreinigungsergebnissen für den jeweiligen Fluidstrom führt. Ein Scheibenpaar bildet insoweit ein Modul aus, das in diesem Zusammenhang die kleinste Filtrationseinheit darstellt.

Bei einer weiteren bevorzugten Ausführungsform der erfindungsgemäßen Vorrichtung ist vorgesehen, dass die einzelnen Scheiben des Mediums ein Scheibenpaket bilden, die in eine fluiddurchlässige topfartige Stützstruktur eingestapelt sind. Aufgrund der topfartigen äußeren Stützstruktur mit den eingestapelten Scheiben des Scheibenpaketes entsteht ein Stapelpaket als Ganzes und als tauschbare Einheit, die sich insoweit händisch in einfacher Weise gegen ein entsprechendes Neuelement im Bedarfsfall tauschen lässt.

Hierfür ist vorzugsweise weiter vorgesehen, dass das Scheibenpaket als Ganzes einen Hohlzylinder ausbildet, mit zwei einander gegenüberliegenden Fluidanschlussstellen, die einen Durchflusskanal im Innern des Hohlzylinders nach außen hin begrenzen und in die einander gegenüberliegend zumindest teilweise jeweils eine Elementaufnahme eingreift. Dabei dient die jeweilige Elementaufnahme dazu, das Scheibenpaket sicher innerhalb der topfartigen Stützstruktur zu positionieren, was der Funktionssicherheit zugutekommt.

Bei einer weiteren bevorzugten Ausführungsform der erfindungsgemäßen Vorrichtung ist vorgesehen, dass die eine Elementaufnahme Teil eines Aufnahmekorbes ist, der zumindest teilweise ein Bypassventil für das zugehörige Element aufnimmt und die andere Elementaufnahme ist Teil einer Schale, die mit einer zugehörigen Schale am Fluidausgang des zugehörigen Gehäuseteils eine Schwenklagerung für das Element bildet. Durch die Integration des Bypassventiles innerhalb des Aufnahmekorbes der Elementaufnahme ist das Bypassventil platzsparend in dem zugehörigen Element integriert und vor äußeren Einflüssen geschützt, was einem langandauernden Betrieb mit der Vorrichtung zugutekommt.

Die gegenüberliegend an der anderen Elementaufnahme angeordnete Schwenklagerung bildet eine kardanische, fußseitige Lagerung für das Element als Ganzes und mittels der sphärischen Lagerung respektive Schwenklagerung lässt sich das Element in eine Funktionsposition bringen, die für das Element selbst kollisionsfrei ist, so dass dieses nicht ungewollt an Deckelteilen eines Abschlussdeckels eines Vorrichtungsgehäuses der Filtervorrichtung anschlagen kann.

Für eine Vereinheitlichung der Bauweise der Vorrichtung als Ganzes ist vorgesehen, dass das andere, vorzugsweise Partikel abreinigende Element vergleichbar dem einen Element in vergleichbaren Elementaufnahmen innerhalb des zugehörigen Gehäuseteils aufgenommen ist, wobei bevorzugt beide Gehäuseteile einen gleichen oder im Wesentlichen gleichen konstruktiven Aufbau haben, was Kosten sparen hilft.

Bei einer weiteren besonders bevorzugten Ausführungsform der erfindungsgemäßen Vorrichtung ist vorgesehen, dass die Umschalteinrichtung einen Kugelhahn aufweist, insbesondere in Form eines 3-Wege-Kugelhahnes. Dahingehende Kugelhähne sind verlässlich im Betrieb und die schaltbare Ventilkugel, die man auch als Küken bezeichnet, lässt sich weitgehend leckagefrei zum Herstellen von einander verschiedenen Fluidwegen betätigen, was händisch aber auch automatisiert erfolgen kann, beispielsweise unter Einsatz eines elektrischen oder hydraulischen Stellmotors.

Im Folgenden wird die erfindungsgemäße Vorrichtung anhand eines Ausführungsbeispiels nach der Zeichnung näher erläutert. Dabei zeigen in prinzipieller und nicht maßstäblicher Darstellung die
- Figur 1: eine perspektivische Draufsicht auf die Vorrichtung als Ganzes;
- Figur 2: einen Längsschnitt durch die Vorrichtung nach der Figur 1;
- Figur 3: in Blickrichtung auf die Figuren 1 und 2 gesehen ein linkes Gehäuseteil im Längsschnitt, mit einem aufgenommenen Element, das zumindest teilweise Cellulosematerial aufweist; und
- Figur 4: das fußseitige Anschlussteil für das in Figur 3 dargestellte Element nebst zugehöriger Schwenklagerung für das Element.

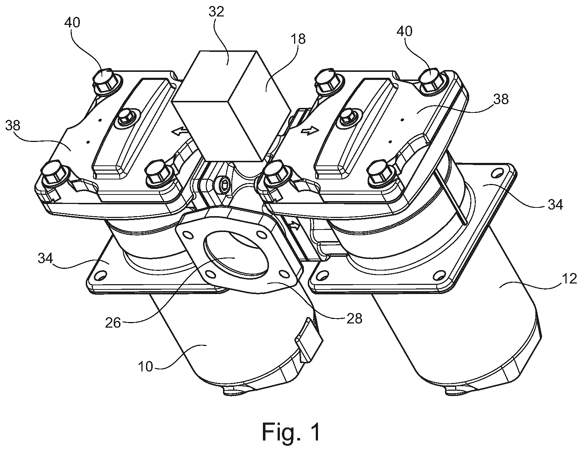

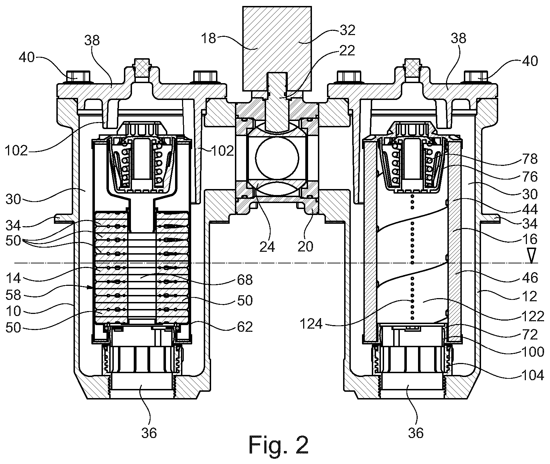

Die Vorrichtung nach der perspektivischen Darstellung in Figur 1 dient dem Behandeln eines Fluids und weist hierfür zwei einzelne, räumlich voneinander getrennte Gehäuseteile 10, 12 auf. Wie insbesondere die Längsschnittdarstellung nach der Figur 2 zeigt, ist in jedem Gehäuseteil 10, 12 ein Element 14 bzw. 16 aufgenommen. Ferner ist zwischen den beiden Gehäuseteilen 10, 12 eine Umschalteinrichtung 18 aufgenommen, die je nach ihrer Schaltstellung zumindest eines der beiden Gehäuseteile 10, 12 nebst jeweils zugehörigem Element 14, 16 mit Fluid versorgt, insbesondere in Form eines Unfiltratstroms. Die Umschalteinrichtung 18 ist in der Art eines 3-Wege-Kugelhahnes 20 konzipiert mit einem entlang einer vertikal verlaufenden Schwenkachse 22 schwenkbaren Küken 24 in der Art einer Ventilkugel.

In der in der Figur 2 gezeigten Schaltposition des Kükens 24 der Umschalteinrichtung 18 weist diese an ihrer freien Stirnseite eine Fluidverbindung zu einem Fluideingang 26 auf, der in Blickrichtung auf die Figur 1 gesehen dem dahingehenden Betrachter zugewandt ist. Der dahingehende Fluideingang 26 weist an seiner diesbezüglich freien Stirnseite eine Flanschplatte 28 auf, die dem Anschließen einer üblichen Verrohrung (nicht dargestellt) eines Fluid- oder Hydraulikkreises dient. Insoweit wird regelmäßig ein Unfiltratstrom respektive zu behandelnder Fluidstrom über den Fluideingang 26 der Vorrichtung zugeführt. Das angesprochene Küken 24 erlaubt in der gezeigten Schaltstellung nach der Figur 2 eine T-förmige Verbindung zwecks gleichzeitigem Anschließen des jeweiligen Innenraums 30 beider Gehäuseteile 10, 12. Dergestalt wird gleichermaßen der am Fluideingang 26 eintretende Fluidstrom in das Innere der beiden Gehäuseteile 10, 12 aufgeteilt, so dass das jeweilige Element 14, 16 dem gleichen Fluiddruck ausgesetzt ist. Die Schwenkachse 22 ist mit einem Stellantrieb 32 gekoppelt, der bei entsprechender Betätigung das Verschwenken des Kükens 24 ermöglicht, wobei bei einem Verschwenken des Kükens 24 um jeweils 90° nach rechts oder links immer nur noch ein Element 16 oder 14 mit Fluid versorgt ist.

Der dahingehende Aufbau von 3-Wege-Kugelhähnen im Rahmen von dahingehenden Umschalteinrichtungen 18 ist üblich, so dass an dieser Stelle hierauf nicht mehr näher eingegangen wird. Der Stellantrieb 32 weist einen elektrischen oder hydraulischen Stellmotor auf; es kann jedoch auch ein von Hand betätigbarer Umschalthebel vorgesehen sein.

Die Behandlungsvorrichtung nach den Figuren 1 und 2 ist als sogenannte Tanklösung konzipiert, d.h. die beiden Gehäuseteile 10, 12 weisen außenumfangsseitig jeweils eine rechteckförmige Flanschplatte 34 auf, die sich in ein und derselben horizontalen Ebene erstrecken und mit der die Behandlungsvorrichtung als Ganzes auf eine horizontal verlaufende Tankaußenwand (nicht dargestellt) derart aufgesetzt werden kann, dass über entsprechend kreisrunde Ausnehmungen in der dahingehenden Tankwand, die Gehäuseteile 10, 12 teilweise eingesetzt sind und insoweit mit ihrer freien unteren Stirnseite in das Tankinnere ausmünden, wobei hierfür ein jeder Fluidausgang 36 an der Fuß- oder Bodenseite des Gehäuseteiles 10, 12, vorzugsweise unterhalb eines Füllstandsniveaus, in den Tank ausmündet und wobei das jeweils sich ändernde Füllstandsniveau innerhalb des Tanks in Figur 2 mit einem üblichen Dreiecksymbol symbolhaft angegeben ist. In jedem Fall ist dabei die Umschalteinrichtung 18 außerhalb des Tanks und oberhalb der oberen Tankwand angeordnet, die von den Gehäuseteilen 10, 12 teilweise durchgriffen ist.

Des Weiteren sind die beiden Gehäuseteile 10, 12 nach oben hin von jeweils einem Deckelteil 38 über eine Schraubverbindung 40 verschlossen, nach deren Lösen nebst Abheben des Deckelteils 38, einer Wartungsperson es ermöglicht ist, das jeweilige Element 14, 16 durch Entnahme aus dem zugehörigen Gehäuseteil 10 bzw. 12 gegen ein Neuelement mit gleicher oder vergleichbarer Ausprägung zu tauschen.

Das in Blickrichtung auf die Figur 2 gesehen linke Element 14 weist ein Medium 42 auf, das zumindest teilweise aus Cellulosematerial besteht, vorzugsweise jedoch vollständig oder im Wesentlichen vollständig aus Cellulosematerial aufgebaut ist. Das dahingehende Cellulosematerial ist aus Fasern gebildet und mithin fasrig, wobei das Cellulosematerial im Bedarfsfall noch andere Materialien aufweisen kann, wie beispielsweise intrinsisch eingebrachtes Kieselgur und alternativ oder zusätzlich beschichtet oder beflockt sein kann, beispielsweise mit Aktivkohle-Partikeln. Das angesprochene Cellulosematerial ist besonders geeignet fluide Medien voneinander zu trennen, beispielsweise Wasser von Hydrauliköl und/oder eine Abreinigung durchzuführen, beispielsweise wenig partikelreiche Schlämme einschließlich Varnish von Flüssigkeiten zu separieren, wie von Hydraulikmedien oder von Prozesswassern.

Demgegenüber ist das andere Element 16 konventionell aufgebaut, insbesondere mit einer plissierten mehrlagigen Filtermatte als Filtermedium 44 versehen, das überwiegend dazu dient aus einem Fluidstrom Partikelverunreinigungen zu entfernen, um dergestalt einen Unfiltratstrom in einen partikelfreien, abgereinigten Fluidstrom umzuwandeln. Insoweit bildet das zweite Element 16 ein konventionelles Filterelement 46 aus.

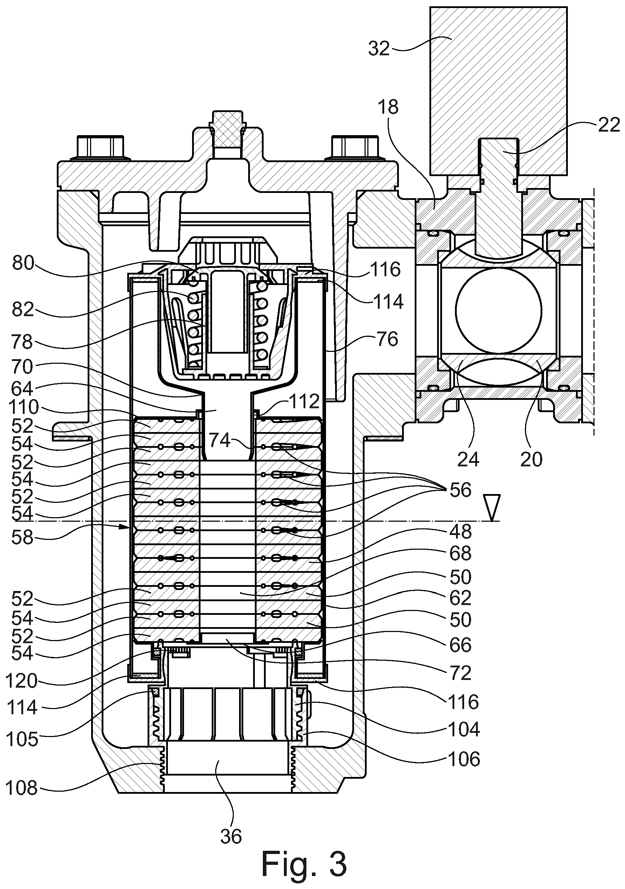

Wie sich weiter aus den Figuren 2 und 3 ergibt, ist das eine Element 14 aus einer Stapelanordnung 48 gebildet, die wiederum aus einer Vielzahl von das Medium 42 bildenden Scheiben 50 aus Cellulosematerial gebildet ist. Jede Scheibe 50 der Stapelanordnung 48 besteht aus zwei miteinander verbundenen Grundkörpern 52, 54, die jeweils zur Fluidführung eine Kanalstruktur 56 aufweisen können. Die jeweiligen Grundkörper 52, 54 einer Scheibe 50 können als Gleichbauteile konzipiert sein und beispielsweise mit ihren jeweiligen Drainagekanälen als Teil der Kanalstruktur 56 ein Waffel- oder Schachbrettmuster ausbilden. Dabei sind bevorzugt die einander benachbarten beiden Grundkörper 52, 54 um einen vorgebbaren Winkelbetrag, beispielsweise von 45°, gegenüber einer vertikalen Hoch- oder Mittenachse gegenüber dem benachbarten Grundkörper 54 bzw. 52 versetzt und unter Bilden einer jeweils eigenstabilen Cellulose-Scheibe 50 partiell miteinander verklebt. Ferner sind die Scheiben 50 in der Art eines geschlossen Ringes ausgebildet mit gleichen Innen- und Außendurchmessern gegenüber benachbarten Scheiben 50 innerhalb der Stapelanordnung 48, die insoweit ein Scheibenpaket 58 als Ganzes ausbildet. Dergestalt ist bei dem Abtrennen eines fluiden Mediums von einem anderen, wie beispielsweise Wasser von Hydrauliköl, eine sichere Trennung erreicht, wobei das eine fluide Medium, wie Wasser, in dem Cellulosematerial des einen Elementes 14 verbleibt und das abgetrennte, weitere fluide Medium, wie Hydrauliköl, gelangt von außen nach innen in den zylindrischen Hohlraum des als Hohlzylinder ausgebildeten Scheibenpaketes 58 zum Fluidausgang 36 des einen oder ersten Gehäuseteils 10. Insoweit gelangt also das derart abgetrennte weitere Fluid, wie Hydraulikmedium, auf die Vorratsseite des nicht dargestellten Tanks und erhöht insoweit dessen Füllstandsniveau, bevor wiederum aus dem Vorratstank bedarfsweise Fluid zur weiteren Verwendung an einen Verbraucher geliefert wird.

Die einzelnen, übereinander angeordneten gleichen Scheiben 50 des Mediums 42, das insoweit das Scheibenpaket 58 bildet, sind in eine fluiddurchlässige topfartige Stützstruktur 62 in einer vorgebbaren Anzahl eingestapelt und dergestalt auf Position gehalten. Je nach Ausgestaltung, insbesondere Größe, der topfartigen Stützstruktur 62 kann aber auch wahlweise eine beliebige Anzahl von Scheiben 50 eingestapelt werden. Insbesondere kann eine geringere Zahl von Scheiben 50 eingestapelt werden, ohne die gesamte Bauhöhe der Stützstruktur 62 auszufüllen. Wie sich weiter aus den Figuren 2 und 3 ergibt, weist das hohlzylindrische Scheibenpaket 58 zwei einander gegenüberliegende Fluidanschlussstellen 64, 66 auf, die einen Durchflusskanal 68 im Innern des Hohlzylinders nach außen hin begrenzen und in die einander gegenüberliegend jeweils eine zugehörige Elementaufnahme 70, 72 eingreift.

Die in Blickrichtung auf die Figuren 2 und 3 gesehen obere Elementaufnahme 70 greift mit einem hohlzylindrischen Stutzen 74 in die obere Fluidanschlussstelle 64 des Scheibenpaketes 58 ein, und zwar um eine vorgebbare axiale Wegstrecke, um dergestalt im oberen Bereich das Scheibenpaket 58 radial abzustützen und axial zu führen. Hierfür kann der Stutzen 74 außenumfangsseitig leicht ballig oder in Richtung des Fluidausganges 36 des Gehäuseteiles 10 konisch zulaufend ausgeführt sein. Nach oben hin erweitert sich der Stutzen 74 in einen im Durchmesser vergrößerten Aufnahmekorb 76, der überwiegend Teile eines üblichen Bypassventiles 78 aufnimmt, das einen federbelasteten Schließteller 80 aufweist. Kann das erste Cellulose haltige Element 14 nicht mehr von außen nach innen durchströmt werden, beispielsweise weil es verblockt ist, entsteht am Element 14 ein erhöhter Differenzdruck, der zum Öffnen des Bypassventiles 78 führt, indem der Schließteller 80 entgegen der Wirkung einer Druckfeder 82 den Fluidweg vom Innenraum 30 des ersten Elementes 14 unter Umgehen des ersten Elementes 14 in Richtung des Fluidausganges 36 freigibt.

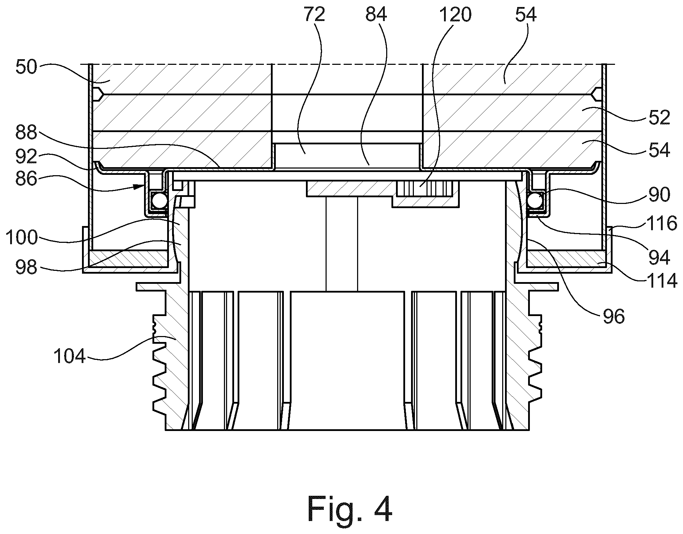

Die andere gegenüberliegende und fußseitige Elementaufnahme 72 greift, wie dies insbesondere die Figur 4 zeigt, mit einem hohlzylindrischen Absatz 84 in den zuunterst angeordneten Grundkörper 54 in der Stapelanordnung 48 in axialer Richtung gesehen teilweise ein und fixiert derart das Scheibenpaket 58 in Richtung des Fluidausganges 36 des ersten Gehäuseteils 10. Der dahingehend hohlzylindrische Absatz 84 ist Teil einer Kappenanordnung 86 mit einem ersten oberen Kappenteil 88, das den hohlzylindrischen Absatz 84 mittig trägt und nach außen hin sowie nach unten umgebördelt mit einer Umfassung einen umlaufenden Dichtring 90 aufnimmt. Des Weiteren ist der in Stapelanordnung gesehen zuunterst liegende Grundkörper 54 zumindest stirnseitig von einer Endkappe 92 eingefasst, die mit einer absatzartigen Vorkragung 94 nach unten hin anschließend eine Art nach oben hin offenen, flachen Aufnahmetopf ausbildet, der die randseitig umfassende Aufnahme des Dichtringes 90 mit den zugehörigen Teilen des oberen Kappenteils 88 aufweist.

Bündig mit der Unterseite des oberen Kappenteils 88 abschließend, ist nach unten hin eine vorspringende Schale 96 mit konvexer Innenausnehmung vorhanden, in die eine weitere, innenliegende Schale 98 mit entsprechend konvexer Außenkrümmung eingreift, so dass insoweit die beiden Schalen 96, 98 eine kardanische Schwenklagerung 100 für das Element 14 ausbilden. Die dahingehende Schwenklagerung 100 dient dazu, dass das Element 14 gegenüber einer vertikalen Mittenachse verschwenkbar ist, um derart passgenau von dem oberen Gehäusedeckel 38 randseitig in kollisionsfreier Weise übergriffen werden zu können. So weist das obere Gehäuseteil 38 des einen Gehäuseteiles 10 nach unten hin vorspringende Stege 102 auf, von denen der längste Steg 102 eine Art Prallschutz für das Element 14 ausbildet, sofern dieses im oberen kopfseitigen Bereich eine Radialströmung in Fortsetzung vonseiten des Fluideinganges 26 erfährt. Der demgegenüber kleinere Steg 102, der in unterschiedlicher Gestaltung auch mehrfach in den Innenraum 30 des Gehäuseteiles 10 hineinragen kann, bildet insoweit eine seitliche Abstützung für den Kopfbereich des Bypassventiles 78 und unabhängig von einer vorgebbaren Fertigungsgenauigkeit kann sich demgemäß das Element 14 an der vorgegebenen Stegkonstruktion des Deckelteiles 38 zwanglos in abstützender Weise ausrichten. Während die Schwenklagerung 100 das Scheibenpaket 58 in seiner axialen Einbaulage im unteren Teil des Gehäuseteils 10 fixiert, kann das obere Ende des Stapelpaketes 58 entlang des Stutzens 74 unter Bilden einer Gleitführung axial abgleiten, so dass thermisch bedingte Längenänderungen am Cellulose-Element 14 derart ausgeglichen werden können.

Das weitere Schalenteil 98 ist Teil eines Anschlussstutzens 104, der mit einer Dichtung 105 versehen, welche in der Figur 4 der Einfachheit halber nicht dargestellt ist, in einen Anschlussstutzen 106 eingeschraubt ist, der wiederum mit einer absatzartigen Verbreiterung auf einer Innenwand des zugehörigen Fluidausganges 36 aufsitzt und ansonsten mit diesem über eine Gewindestrecke 108 fest verbunden ist. Über die einzelnen Anschlussstutzen 104, 106 nebst zugehöriger Gewindestrecken 108 lässt sich insbesondere in axialer Einbaurichtung gesehen gleichfalls ein weiterer Toleranzausgleich für das eine Element 14 herbeiführen.

Wie sich weiter aus der Figur 3 ergibt, ist auch das zuoberst angeordnete Scheibenelement 50 respektive der zuoberst liegende Grundkörper 52 mit einer endkappenartigen Einfassung 110 versehen, die als flache Scheibe oder topfartige Platte ausgebildet innenumfangsseitig in einer zugehörigen Aufnahme einen weiteren Dichtring 112 trägt, der wiederum innenumfangsseitig an der Außenseite des hohlzylindrischen Stutzens 74 unmittelbar anliegt.

Der Stützkörper in Form der hohlzylindrischen, dünnwandigen Stützeinrichtung 62 ist als perforierter Mantel ausgebildet und endseitig über jeweils ein Klebstoffbett 114 in einer endkappenartigen Aufnahme 116 festgelegt, die teilweise Bestandteil des Bypassventiles 78 ist und zum anderen in die eine Schale 96 der Schwenklagerung 100 übergeht. Die beiden endkappenartigen Aufnahmen 116 übergreifen dabei randseitig mit einem vorgebbaren axialen Überstand einen Endbereich des Mantels der Stützeinrichtung 62, die insoweit außenumfangsseitig von der Innenumfangsseite der jeweiligen Aufnahme 116 randseitig übergriffen ist. Der Vollständigkeit halber sei noch erwähnt, dass die Schwenklagerung 100 eine Kippbegrenzung 120 aufweisen kann, die den Schwenkwinkel des Elementes 14 gegenüber der Elementaufnahme respektive dem Anschlussstutzen 104 sinnfällig begrenzt.

Das weitere zweite Element 16 bildet im Wesentlichen ein übliches Partikel abreinigendes Filterelement 46 aus, dessen plissiertes Filtermedium 44 sich zwischen zwei Endkappen erstreckt, von denen die obere Endkappe wiederum das Bypassventil 78 aufweist und die untere Elementkappe ist Teil der Schwenklagerung 100. Das Filtermedium 44 stützt sich nach innen hin gesehen an einer gewundenen Bahn eines fluiddurchlässigen Stützrohres 122 ab, wobei die zugehörige Perforation 124 der einfacheren Darstellung wegen nur andeutungsweise wiedergegeben ist. Dank des weiteren Elementes 16, das als konventionelles Filterelement 46 konzipiert ist, kann ein mit Partikeln versehener Unfiltratstrom, der über den Fluideingang 26 der Vorrichtung zugeführt wird, nach Passieren des Filtermediums 44 als Filtratstrom über den Fluidausgang 36 am unteren Ende des zweiten Gehäuseteiles 12 in den Tank abgeführt werden.

Dergestalt ist es mit der erfindungsgemäßen Vorrichtung möglich, in der gezeigten Betriebsstellung nach der Figur 2, mit dem einen Element 14 eine Fluidtrennung und gleichzeitig mit dem anderen Element 16 eine Partikelabreinigung vorzunehmen. Hieraus ergibt sich aber auch, dass je nach eingenommener Stellung der Umschalteinrichtung 18 mit ihrem Küken 24 nur das eine Element 14 der Trennung von Fluiden dienen kann, wohingegen die Partikelabreinigung mit dem anderen Element 16 stillgesetzt ist und gleichermaßen kann in einer weiteren Umschaltstellung das erste Element 14 stillgesetzt sein und das zweite Element 16 seiner Filtrationsaufgabe nachkommen. Dies hat so keine Entsprechung im Stand der Technik.

## Patentansprüche

1. Vorrichtung zum Behandeln von Fluiden mit zwei Gehäuseteilen (10, 12) und mit mindestens einem darin jeweils, vorzugsweise tauschbar, aufgenommenen Element (14, 16) sowie mit einer zwischen den Gehäuseteilen (10, 12) aufgenommenen Umschalteinrichtung (18), die je nach Schaltstellung zumindest eines der Gehäuseteile (10, 12) nebst jeweils zugehörigem Element (14, 16) mit Fluid versorgt, **dadurch gekennzeichnet, dass** zumindest eines der beiden Elemente (14) ein Medium (42) aufweist, das zumindest teilweise aus Cellulosematerial besteht.

2. Vorrichtung nach Anspruch 1, **dadurch gekennzeichnet, dass** das jeweils andere Element (16) mehrlagig, vorzugsweise plissiert, ausgebildet ist und als Filterelement (46) konzipiert der Partikelabreinigung aus einem Fluid dient.

3. Vorrichtung nach einem der vorstehenden Ansprüche, **dadurch gekennzeichnet, dass** das eine Cellulosematerial aufweisende Element (14) der Wasserabscheidung und/oder der Feinfiltration dient.

4. Vorrichtung nach Anspruch 1 oder 2, **dadurch gekennzeichnet, dass** das eine Element (16) aus einer Stapelanordnung (48) besteht, gebildet aus einer Vielzahl von das Medium (42) bildenden Scheiben (50), von denen zumindest ein Teil das Cellulosematerial aufweist.

5. Vorrichtung nach einem der vorstehenden Ansprüche, **dadurch gekennzeichnet, dass** jede Scheibe (50) der Stapelanordnung (48) aus zwei miteinander verbundenen Grundkörpern (52, 54) besteht, die jeweils zur Fluidführung eine Kanalstruktur (56) aufweisen.

6. Vorrichtung nach einem der vorstehenden Ansprüche, **dadurch gekennzeichnet, dass** die einzelnen Scheiben (50) des Mediums (42) ein Scheibenpaket (58) bilden, die in eine fluiddurchlässige topfartige Stützstruktur (62) eingestapelt sind.

7. Vorrichtung nach einem der vorstehenden Ansprüche, **dadurch gekennzeichnet, dass** das Scheibenpaket (58) als Ganzes einen Hohlzylinder ausbildet, mit zwei einander gegenüberliegenden Fluidanschlussstellen (64, 66), die einen Durchflusskanal (68) im Innern des Hohlzylinders nach außen hin begrenzen und in die einander gegenüberliegend zumindest teilweise jeweils eine Elementaufnahme (70, 72) eingreift.

8. Vorrichtung nach einem der vorstehenden Ansprüche, **dadurch gekennzeichnet, dass** die eine Elementaufnahme (70) Teil eines Aufnahmekorbes (76) ist, der zumindest teilweise ein Bypassventil (78) für das zugehörige Element (14, 16) aufnimmt und die andere Elementaufnahme (72) ist Teil einer Schale (96), die mit einer zugehörigen Schale (98) am Fluidausgang (36) des zugehörigen Gehäuseteils (10, 12) eine Schwenklagerung (100) für das Element (12, 14) bildet.

9. Vorrichtung nach einem der vorstehenden Ansprüche, **dadurch gekennzeichnet, dass** das andere Element (16) vergleichbar dem einen Element (14) in Elementaufnahmen (70, 72) innerhalb des zugehörigen Gehäuseteils (10, 12) aufgenommen ist.

10. Vorrichtung nach einem der vorstehenden Ansprüche, **dadurch gekennzeichnet, dass** die Umschalteinrichtung (18) einen Kugelhahn aufweist, insbesondere in Form eines 3-Wege-Kugelhahnes (20).

## Geänderte Patentansprüche

### Geänderte Patentansprüche gemäss Regel 137(2) EPÜ.

1. Vorrichtung zum Behandeln von Fluiden mit zwei Gehäuseteilen (10, 12) und mit mindestens einem darin jeweils, vorzugsweise tauschbar, aufgenommenen Element (14, 16) sowie mit einer zwischen den Gehäuseteilen (10, 12) aufgenommenen Umschalteinrichtung (18), die je nach Schaltstellung zumindest eines der Gehäuseteile (10, 12) nebst jeweils zugehörigem Element (14, 16) mit Fluid versorgt, wobei zumindest eines der beiden Elemente (14) ein Medium (42) aufweist, das zumindest teilweise aus Cellulosematerial besteht,
**dadurch gekennzeichnet,**
**dass** das eine Element (16) aus einer Stapelanordnung (48) besteht, gebildet aus einer Vielzahl von das Medium (42) bildenden Scheiben (50), von denen zumindest ein Teil das Cellulosematerial aufweist, und
**dass** jede Scheibe (50) der Stapelanordnung (48) aus zwei miteinander verbundenen Grundkörpern (52, 54) besteht, die jeweils zur Fluidführung eine Kanalstruktur (56) aufweisen.

2. Vorrichtung nach Anspruch 1, **dadurch gekennzeichnet, dass** das jeweils andere Element (16) mehrlagig, vorzugsweise plissiert, ausgebildet ist und als Filterelement (46) konzipiert der Partikelabreinigung aus einem Fluid dient.

3. Vorrichtung nach einem der vorstehenden Ansprüche, **dadurch gekennzeichnet, dass** das eine Cellulosematerial aufweisende Element (14) der Wasserabscheidung und/oder der Feinfiltration dient.

4. Vorrichtung nach einem der vorstehenden Ansprüche, **dadurch gekennzeichnet, dass** die einzelnen Scheiben (50) des Mediums (42) ein Scheibenpaket (58) bilden, die in eine fluiddurchlässige topfartige Stützstruktur (62) eingestapelt sind.

5. Vorrichtung nach Anspruch 4, **dadurch gekennzeichnet, dass** das Scheibenpaket (58) als Ganzes einen Hohlzylinder ausbildet, mit zwei einander gegenüberliegenden Fluidanschlussstellen (64, 66), die einen Durchflusskanal (68) im Innern des Hohlzylinders nach außen hin begrenzen und in die einander gegenüberliegend zumindest teilweise jeweils eine Elementaufnahme (70, 72) eingreift.

6. Vorrichtung nach Anspruch 5, **dadurch gekennzeichnet, dass** die eine Elementaufnahme (70) Teil eines Aufnahmekorbes (76) ist, der zumindest teilweise ein Bypassventil (78) für das zugehörige Element (14, 16) aufnimmt, und die andere Elementaufnahme (72) Teil einer Schale (96) ist, die mit einer zugehörigen Schale (98) am Fluidausgang (36) des zugehörigen Gehäuseteils (10, 12) eine Schwenklagerung (100) für das Element (12, 14) bildet.

7. Vorrichtung nach Anspruch 5 oder 6, **dadurch gekennzeichnet, dass** das andere Element (16) vergleichbar dem einen Element (14) in Elementaufnahmen (70, 72) innerhalb des zugehörigen Gehäuseteils (10, 12) aufgenommen ist.

8. Vorrichtung nach einem der vorstehenden Ansprüche, **dadurch gekennzeichnet, dass** die Umschalteinrichtung (18) einen Kugelhahn aufweist, insbesondere in Form eines 3-Wege-Kugelhahnes (20).
